# EUROPEAN PATENT APPLICATION

(11) **EP 4 141 720 A1**
(43) Date of publication of application: **01.03.2023**
(21) Application number: 22176983.9
(22) Date of filing: 02.06.2022
(51) Int. Cl.: G06F 21/62, G06Q 10/08, H04L 9/32, H04L 9/00, H04L 9/40

(54) **DATA PROCESSING PROGRAM, DATA PROCESSING METHOD, AND DATA PROCESSING DEVICE**

(30) Priority: 24.08.2021 JP 2021136565
(71) Applicant: FUJITSU LIMITED, Kawasaki-shi, Kanagawa 211-8588 (JP)
(72) Inventor: Sato, Izuru, Kawasaki-shi, Kanagawa, 211-8588 (JP)
(74) Representative: Hoffmann Eitle

(57) **Abstract**

A data processing program that causes at least one computer to execute a process, the process includes acquiring a condition information included in event information that indicates events performed in each of nodes when a first event is performed in a first node of the nodes; determining whether information regarding the first event satisfies the acquired condition information; registering the first event to the event information when the information regarding the first event satisfies the acquired condition information; and determining the first event is not registered to the event information when the information regarding the first event does not satisfy the acquired condition information.

## Description

### FIELD

The embodiment discussed herein is related to a data processing program, a data processing method, and a data processing device.

### BACKGROUND

Chain data lineage (called CDL) is a technique with which data of a history of processing of data held for each organization such as a company, a transaction history between organizations shared on a system, or the like can be confirmed from other organizations. In the CDL, for example, when data including content of an event held by a certain organization is sent to an API as event information, a server of an API adds an event history ID, a hash value, or the like to the event information and records the event information in a database (DB) such as a system distributed ledger. The API is an abbreviation of application programming interface.

For example, the CDL processes the data of the event information of the certain organization and records the data in a DB of the own organization by setting the DB between the organizations as a hash chain. While the CDL makes it possible for a user to easily search for and acquire the data processing history for each organization, the CDL has tamper resistance to a highly confidential history and data.

As the related art, for example, there is a technique that can limit a person who processes electronic information by a sender by adding restriction information and a history to the electronic information by a sending source and including an operation restriction attribute of an operation that can be performed by a reception side and restriction conditions such as a user or a password as the restriction information. Furthermore, for example, there is a technique that records a process control event in a blockchain of a distributed ledger, in which only an authorized network participant can add a document, and rejects a network participant with no cryptographic ID certification that matches an ID that is allowed to add data. Furthermore, for example, there is a technique in which a specific authorized user can write and edit data by embedding a program in a document with the blockchain of the distributed ledger and executing a program in a user environment of a partner who accesses the blockchain.

International Publication Pamphlet No. WO 2008/099738, Japanese Laid-open Patent Publication No. 2020-113283, and U.S. Patent Application Publication No. 2019/0230092 are disclosed as related art.

### SUMMARY

### [TECHNICAL PROBLEM]

With a traditional CDL, if an event history ID is known, new event information can be registered from a node of an organization that can access event information. For example, when a company A creates a shipping event in which a shipping destination is not specified, a company B that is a proper recipient registers a history of event information of a reception event with respect to the shipping event of the company A. However, if another company that is not a proper recipient has the event history ID, the another company can register the history of the reception event. In this case, for example, even though a company D does not actually receive a product, the company D can register the reception event, and it is not possible to maintain confidentiality of a system. This deteriorates reliability.

In one aspect, an object of the embodiment is to prevent registration of an event from a node that is not qualified for registration.

### [SOLUTION TO PROBLEM]

According to an aspect of the embodiments, a data processing program that causes at least one computer to execute a process, the process includes acquiring a condition information included in event information that indicates events performed in each of nodes when a first event is performed in a first node of the nodes; determining whether information regarding the first event satisfies the acquired condition information; registering the first event to the event information when the information regarding the first event satisfies the acquired condition information; and determining the first event is not registered to the event information when the information regarding the first event does not satisfy the acquired condition information.

### [ADVANTAGEOUS EFFECTS OF INVENTION]

According to one aspect of the embodiment, an effect is obtained that can prevent registration of an event from a node that is not qualified for registration.

### BRIEF DESCRIPTION OF DRAWINGS

FIG. 1 is an explanatory diagram illustrating an example of a data processing method according to an embodiment;
FIG. 2 is a diagram illustrating a configuration example of a CDL system;
FIG. 3 is a diagram illustrating a hardware configuration example of a data processing device;
FIG. 4 is a block diagram illustrating a functional configuration example of the data processing device;
FIG. 5 is a table illustrating an example of event information;
FIG. 6 is a flowchart illustrating a data processing example of the data processing device;
FIG. 7 is a flowchart illustrating a processing example that the data processing device executes; and
FIG. 8 is a flowchart illustrating a processing example that a client executes.

### DESCRIPTION OF EMBODIMENTS

Hereinafter, embodiments of a data processing program, a data processing method, and a data processing device that are disclosed will be described in detail with reference to the drawings.

### (Example of data processing method according to embodiment)

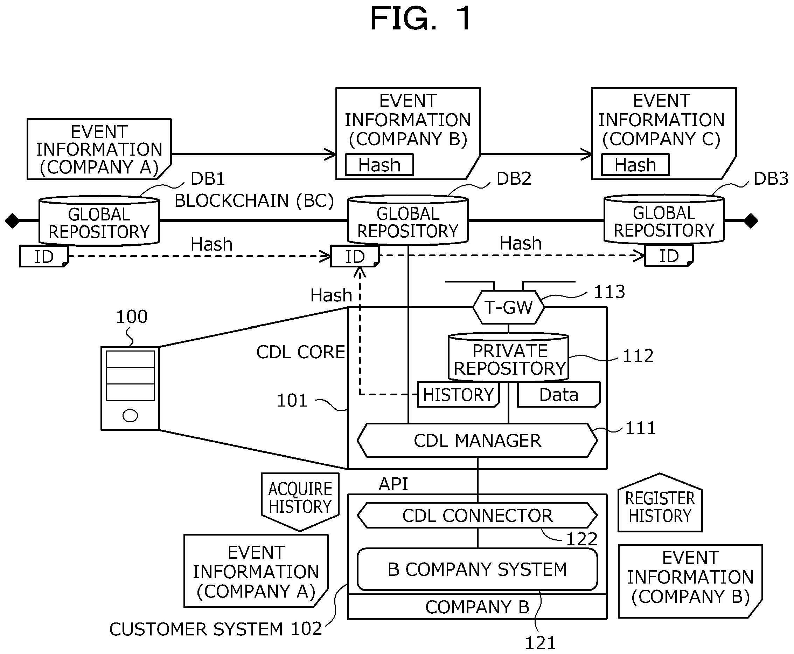

FIG. 1 is an explanatory diagram illustrating an example of a data processing method according to an embodiment. A data processing device 100 is, for example, a computer that registers and acquires event information in and from a global repository (distributed ledger) in a blockchain (BC) accessed by a CDL system. The CDL system, for example, sequentially records event information of an event held for each organization in the BC as a history.

The data processing device 100 executes and processes a function of a CDL core 101 of the CDL system. The CDL core 101 is respectively arranged in each organization (node) participating in a CDL network. For convenience, in FIG. 1, only a node of a company B of organizations of companies A to C is illustrated, and the node of the company B includes the CDL core 101 and a customer system 102 of the company B.

The CDL core 101 includes functions of a CDL manager 111, a private repository 112, and a T-GW 113. The customer system 102 includes functions of a company system 121 and a CDL connector 122. The T-GW is an abbreviation for transport gateway. The T-GW 113 accesses history information and data (Data) stored in a private repository 112 of a node of another organization.

The CDL manager 111 opens an API to the customer system 102 that is a client. A user calls the API of the CDL core 101 via the CDL connector 122 of the customer system 102 and sends event information regarding an event desired to be recorded to the API. The API adds necessary information to the event information from the user and records the event information in the private repository 112. The user of the customer system 102 can search and acquire the event information recorded in the private repository 112 of the CDL core 101 via the API.

In this way, when registering the event information (history registration) to the CDL using the CDL connector 122 or referring to (history acquisition) the event information, the customer system 102 accesses the private repository 112 and the global repository DB of the BC.

In the CDL system illustrated in FIG. 1, the CDL core 101 (data processing device 100) is arranged in the node for each organization as a server. Each CDL core 101 provided for each organization calls an API of Hyperledger Fabric and records the event information in the distributed ledger (global repository) DB in the BC and makes the CDL core 101 of another organization be also able to refer to the event information. Not limited to this, the node may be placed in a cloud or may be placed in a network of each organization. Furthermore, a form may be used in which a central server trusted by all organizations (user) provides only one API.

After the user calls the API, the CDL core 101 assigns an event history ID to event information sent from the user. The event history ID is assigned by the CDL core 101 (API side) when the event history ID is not included in information sent to the API when the user requests to register the event information.

The event history ID uniquely identifies event information. The user of the customer system 102 specifies the event history ID assigned to the registered event information and calls the API that requests event information so that the CDL manager 111 returns event information corresponding to the event history ID to the user.

The event history ID (ID described in FIG. 1) is event identification information that indicates an "event" itself opened to all the organizations and includes a unique character string in the whole CDL system. This event history ID includes a pointer to history data stored in the private repository 112.

The private repository 112 saves history information managed in organization units and data (Data), of information handled by the CDL system. The history information is information regarding a detailed processing history associated with an event. The data (Data) is detailed data associated with an event such as an image file.

With the CDL system, the user can refer to another piece of event information related to certain event information. The CDL core 101 assigns a hash value (Hash described in FIG. 1) to the event information, in addition to the event history ID. When the user refers to the another piece of event information, in order to confirm that the another piece of event information is not changed, the API of the CDL core 101 embeds a hash value of the another piece of event information in the event information at the time of event registration.

By calculating and collating the hash value relative to content (data) of the event information when reference destination event information is read, the CDL core 101 verifies whether or not the content of the reference destination event information is changed when a certain event is read.

With the CDL system, for example, the user for each organization can specify a plurality of (including zero) pieces of past event information created by another organization in the past, related to the certain event information. When the user requests event registration, the CDL core 101 exemplifies past event information related to the event information to be registered so as to associate the registered event information with the past event information. For example, the CDL core 101 creates a branch graph indicating an association between histories of the respective events and exemplifies immediately-preceding related event information related to a new event as the past event information.

For example, a case is considered where each of the companies A, B, and C registers an event. For example, the manufacturing company A registers event information of a "shipping event" for shipping products. The company B (refer to FIG. 1) registers event information of a "receipt event" for receiving the shipped products and transports the products to the company C. The company C registers event information of a "reception event" for finally receiving the products.

When registering each event, the customer system 102 (CDL connector 122) of each company describes past events in each event. For example, because an event to be registered does not have past events to be registered, the customer system 102 of the company A does not describe the past event information. The customer system 102 of the company B describes an event history ID of an event registered by the company A in an event to be registered. The customer system 102 of the company C records an event history ID of an event registered by the company B in an event to be registered.

Regarding the record of the event history ID of the past event, the customer system 102 calls the API that searches for the past event information in which the event history ID is described or directly receives a notification of event information from the corresponding organization and records the event history ID.

The API (CDL manager 111) of the CDL core 101 that is requested to perform the registration described above calculates a hash value of the past event referred when the event is registered and embeds the hash value in event information of a new event to be registered. For example, at the time when the company B registers the event information, the API of the company B extracts the event history ID of the "shipping event" in the past registered by the company A, calculates a hash value of the event information (data) of the company A, and embeds the hash value in the event information of the "receipt event" that is newly registered by the company B.

Although the information using the hash value has a mechanism that makes it impossible to change recorded information, there is a case where the recorded information is desired to be corrected in reality. For example, a case is considered where, after the company A has registered event information having a wrong shipping quantity, it is desired to correct the wrong shipping quantity to a correct shipping quantity, or the like. In this case, the CDL system can register an event referring to an event to be corrected as a new event. By describing that the event is corrected as an event type when the event is registered, the CDL system can distinguish the event from another event. The correction event can be obtained by using the API "that specifies a certain event history ID and tracks an event associated with past event in a longitudinal direction of time" included in a CDL when it is desired to refer to an original event.

Here, problems of a traditional CDL will be described. With the traditional CDL, any user who knows the event history ID can register an event that refers to the event having the event history ID. For example, as an example, in a case of an example in which products are shipped, transported, and received between the companies A, B, and C described above, any user who can know the event history ID of the "shipping event" registered by the company A can register a new event connected to (related to) the event of the company A.

In this case, the company D that is not a proper recipient can register the reception event as a history on the basis of the event history ID, and the company D can register the reception event even though the company D does not actually receive the products. Then, there is a possibility that an unauthorized user in the company D improperly acquires an incentive of the product or the like. When such a situation occurs, it is not possible for the CDL to maintain confidentiality of the event information.

Furthermore, as another example, a plurality of correction histories of the event information can be created, and a state occurs where it is unknown which one of the plurality of correction histories is correct information as the correction. In this way, when a new event is registered, it is not possible for the traditional CDL to control the number of events that refer to the event later, who can register the event, or the like.

Therefore, the data processing device 100 (CDL core 101) according to the embodiment executes the following processing.
(1) The data processing device 100 sets restriction information that allows to register a new event to the event information, to the event information. The restriction information is information used to allow to update past event information, and includes one or a plurality of pieces of information such as a next (new) event history ID, a user who accesses the event information, a password, or secret information. The user information may be information regarding a node (organization) name or the like in addition to information regarding an individual user name.
(2) The data processing device 100 that accepts event registration refers to the past event information described in the event requested to be registered and allows the registration in a case where conditions of the restriction information set to the referred event information are satisfied.

For example, in a case where information regarding a next event history ID is set as the restriction information, the data processing device 100 allows to register a new event only to a user who has accessed event information at the earliest timing. Furthermore, in a case where information regarding a node, for example, a user name or an organization name for each node is set as the restriction information, the data processing device 100 allows to register a new event to the user or the organization of the corresponding node.

Furthermore, it is assumed that both of the user name and the password be set as the restriction information. In this case, if a name of a user who has requested to register a new event that refers to the event information matches the set user name and a password input by the user matches the set password, the data processing device 100 allows the corresponding user to register the new event.

Furthermore, in a case where secret information is set as the restriction information, only a user who knows the secret information can register the new event. Furthermore, in a case where a password is set as the restriction information, for example, the data processing device 100 has a function for checking a password as assuming that password authentication can be used only once and maintains the confidentiality of the event information (details will be described later).

In this way, according to the data processing device 100 according to the embodiment, by setting the restriction information to the event information, registration of a new event is allowed in a case where the conditions set to the restriction information are satisfied. As a result, the data processing device 100 prevents registration of an event from a node that is not qualified for registration, and confidentiality of the CDL is maintained.

### (Configuration example of CDL system)

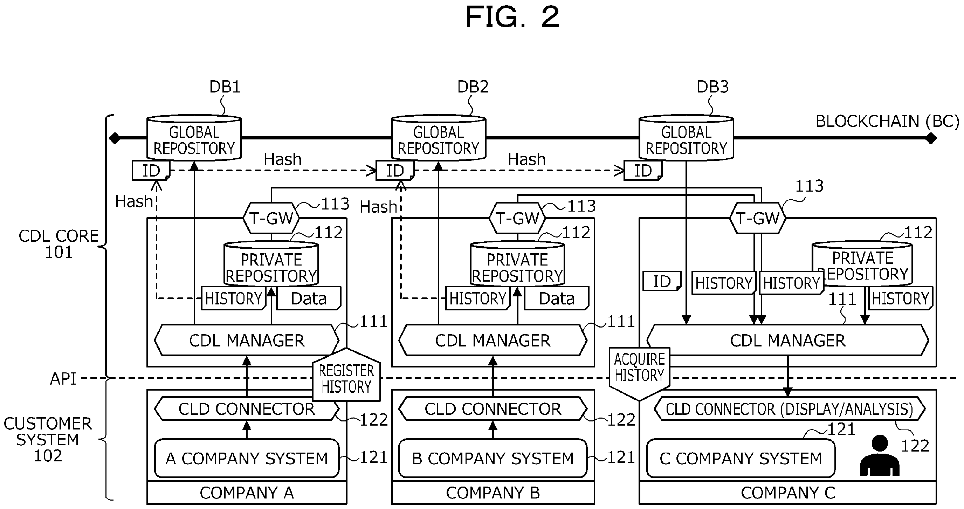

FIG. 2 is a diagram illustrating a system configuration example of the CDL. In FIG. 2, the component same as that in FIG. 1 is denoted with the same reference. In FIG. 2, an example is illustrated in which three nodes of the companies A to C are arranged. The pieces of event information registered by the respective companies are recorded respectively in global repositories DB1 to DB3 in the BC.

An example of updating the event information will be described with reference to FIG. 2. It is assumed that the data processing device 100 (CDL core 101) of the company A that is positioned on an upstream side node of the company B as viewed as a flow of the event information register new event information in the global repository DB1 in the BC. As in the above, it is assumed that the events of the respective companies be the "shipping event" of the products for the company A, the "receipt event" of the products for the company B, and the "reception event" of the products for the company C.

When acquiring the event information from the global repository DB1 in the BC, the data processing device 100 of the company B acquires the "shipping event" of the products registered by the company A on the basis of an ID of the event information and executes processing of the "receipt event" of the products. In this case, the data processing device 100 of the company B records a hash value for the event information of the company A that is a past event in the event information and records event information of the new "receipt event" performed by the company B in the global repository DB2 in the BC.

As a result, in the BC, for the event information "shipping event" registered in the global repository DB1 by the data processing device 100 of the company A, the data processing device 100 of the company B records the "receipt event" obtained by updating the event information of the company A in the global repository DB2. The event information in the global repository DB2 is event information in which the event information (history of "receipt event") by the company B is added to the event information (history of "shipping event") by the company A. In this way, the event information in the BC is updated in correspondence with the new events respectively performed by the data processing devices 100 of the respective companies A and B.

Furthermore, in a node of the company C positioned at a downstream side node of the company B, the data processing device 100 can acquire each event information updated by the companies A and B that are past events and can display, analyze, or the like the event information. The data processing device 100 of the company C records the "reception event" obtained by updating the event information of the company B in the global repository DB3.

### (Hardware configuration example of data processing device)

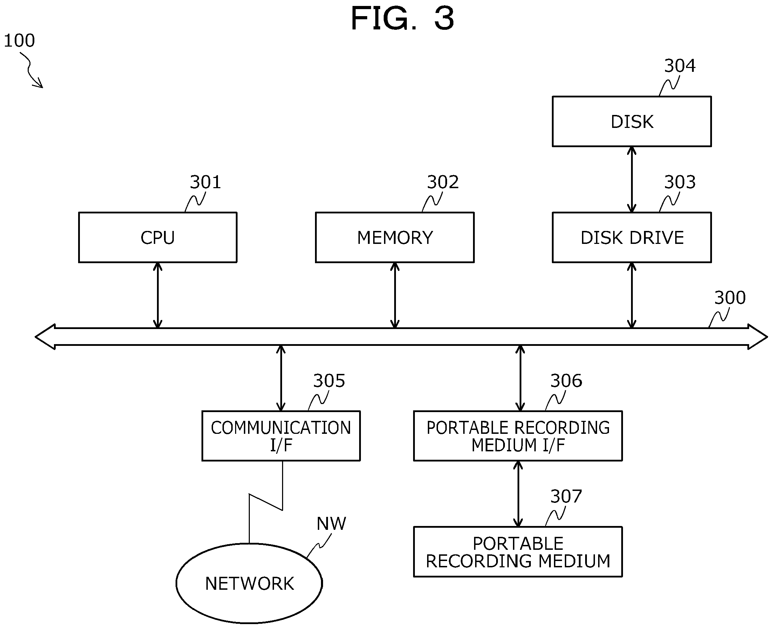

FIG. 3 is a diagram illustrating a hardware configuration example of a data processing device. The data processing device 100 (corresponding to CDL core 101 in FIG. 1) can be configured by a computer such as a server including general-purpose hardware illustrated in FIG. 3.

The data processing device 100 includes a central processing unit (CPU) 301, a memory 302, a disk drive 303, and a disk 304. Furthermore, the data processing device 100 includes a communication interface (I/F) 305, a portable recording medium I/F 306, and a portable recording medium 307. Furthermore, the individual components are connected to each other by a bus 300.

Here, the CPU 301 functions as a control unit that controls the entire data processing device 100. The CPU 301 may include a plurality of cores. The memory 302 includes, for example, a read only memory (ROM), a random access memory (RAM), a flash ROM, and the like. For example, the flash ROM stores an operating system (OS) program, the ROM stores application programs, and the RAM is used as a work area for the CPU 301. The program stored in the memory 302 is loaded to the CPU 301 to cause the CPU 301 to execute coded processing.

The disk drive 303 controls reading and writing of data from and into the disk 304, under the control of the CPU 301. The disk 304 stores data written under the control of the disk drive 303. The disk 304 may be a magnetic disk, an optical disk, or the like, for example.

The communication I/F 305 is connected to a network NW through a communication line, and is connected to an external computer through the network NW. The external computer is, for example, the data processing device 100 (CDL core 101) of the another organization (node) illustrated in FIG. 2, and the network NW corresponds to the network that connects between the T-GWs 113 of the respective organizations (node). Then, the communication I/F 305 manages an interface between the network NW and the inside of the device, and controls input/output of data from an external computer. For example, a modem, a local area network (LAN) adapter, or the like may be employed as the communication I/F 305.

The portable recording medium I/F 306 controls reading and writing of data from and into the portable recording medium 307 under the control of the CPU 301. The portable recording medium 307 stores data written under the control of the portable recording medium I/F 306. For example, a compact disc read only memory (CD-ROM), a digital versatile disk (DVD), a universal serial bus (USB) memory, or the like are exemplified as the portable recording medium 307.

Note that the data processing device 100 may include, for example, an input device, a display, or the like in addition to the components described above.

### (Functional configuration example of data processing device)

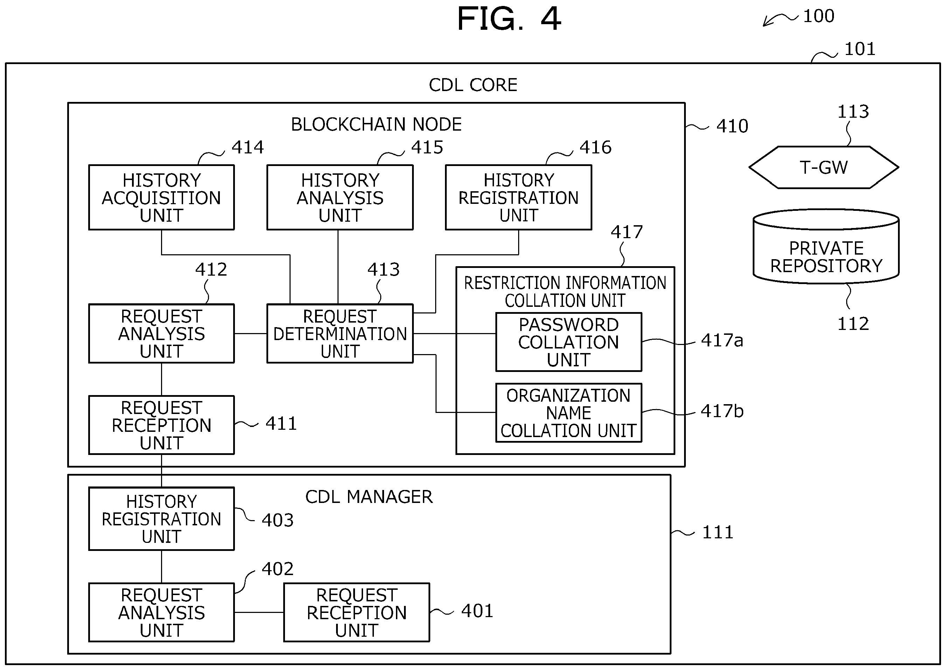

FIG. 4 is a block diagram illustrating a functional configuration example of the data processing device 100. The data processing device 100 (CDL core 101 in FIG. 1) includes the CDL manager 111, the private repository 112, the T-GW 113, and a blockchain node 410.

The CDL manager 111 includes a request reception unit 401, a request analysis unit 402, and a history registration unit 403. The request reception unit 401 receives a request for acquiring event information or registering new event information on the basis of a user operation on the customer system 102. The request analysis unit 402 analyzes whether the request of the user received by the request reception unit 401 is the acquisition or the registration of the event information. At the time when a user registers a new event, the history registration unit 403 outputs the corresponding event information to the blockchain node 410.

The blockchain node 410 includes a request reception unit 411, a request analysis unit 412, a request determination unit 413, a history acquisition unit 414, a history analysis unit 415, a history registration unit 416, and a restriction information collation unit 417.

The request reception unit 411 receives a request for event information from the history registration unit 403 of the CDL manager 111. The request analysis unit 412 analyzes content of the request for the event information received by the request reception unit 411. For example, the request analysis unit 412 analyzes whether the request for the event information received by the request reception unit 411 is the acquisition of the event information or the registration of the event information.

The request determination unit 413 determines the request for the event information analyzed by the request analysis unit 412. If the request is history acquisition, the request determination unit 413 requests the history acquisition unit 414 to acquire the corresponding event information. The history acquisition unit 414 acquires the corresponding event information from the global repository DB and outputs the acquired event information to the request determination unit 413. The event information acquired by the history acquisition unit 414 is output to the customer system 102 via the CDL manager 111.

The history analysis unit 415 analyzes a history included in the event information acquired by the history acquisition unit 414. Then, if the request is history registration, the request determination unit 413 determines whether or not new event information input via the CDL manager 111 is registered on the basis of the history of the event information analyzed by the history analysis unit 415. At this time, the request determination unit 413 executes restriction information collation processing by the restriction information collation unit 417 on the basis of restriction information included in the acquired event information and determines whether or not to allow registration of new event information on the basis of a collation result.

The restriction information collation unit 417 includes a password collation unit 417a and an organization name collation unit 417b. In a case where the restriction information included in the event information is password collation, the password collation unit 417a collates a password included in the event information and a password input by a user when requesting registration of new event information and outputs a collation result to the request determination unit 413. In a case of this password collation, if the password collation result indicates matching, the request determination unit 413 allows to register the new event. On the other hand, the password collation result indicates no matching, the request determination unit 413 does not allow to register the new event.

In a case where the restriction information included in the event information is an organization name (for example, company name), the organization name collation unit 417b collates an organization name included in the event information and an organization name requested for registering new event information and outputs a collation result to the request determination unit 413. In a case of this organization name collation, if the organization name collation result indicates matching, the request determination unit 413 allows to register the new event. On the other hand, the organization name collation result indicates no matching, the request determination unit 413 does not allow to register the new event. In a case where the restriction information included in the event information is a user name, the organization name collation unit 417b executes similar collation processing on the basis of the user name instead of the organization name.

Although not illustrated in FIG. 4, the restriction information collation unit 417 includes a collation unit related to the event history ID and secret information described above in addition to the above.

In a case where the determination result of the request determination unit 413 indicates allowance of the registration, the history registration unit 416 records the corresponding new event information in the global repository DB.

### (Example of event information)

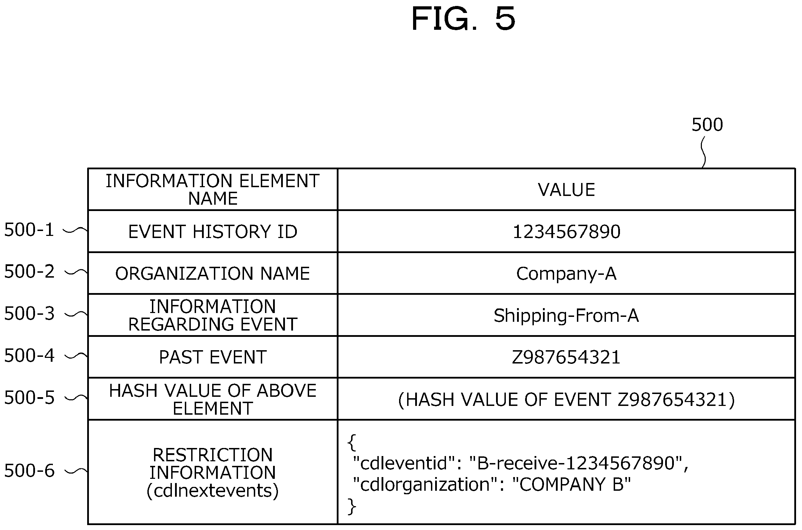

FIG. 5 is a table illustrating an example of event information. Event information 500 includes a plurality of information element names and a value for each information element name. Actual data of the event information 500 includes a list of the values for the respective information element names. The event information 500 includes, for example, as the information elements, an event history ID 500-1, an organization name 500-2, information (content) regarding an event 500-3, information (content) regarding a past event 500-4, a hash value 500-5, and restriction information 500-6.

The event information 500 in FIG. 5 is an information example when the company A described above registers the event "shipping event", and the data processing device 100 (CDL core 101) sets the information. The event history ID 500-1 is a unique character string in the whole CDL, and for example, a value including a UUID character string "1234567890" is set. As the organization name 500-2, a value of an organization name that has created the event information, for example, "Company-A (company A)" is set. As the information regarding the event 500-3, a value indicating content of the event when the event information has been created, for example, "Shipping-From-A (shipped from company A)" is set.

As the information regarding the past event 500-4, a plurality of values indicating content of the past event at the time of event creation is exemplified. In a case of the company A, a value "Z987654321" indicating a past event before the "shipping event" is set. The hash value 500-5 is a hash value of data (value) of the past event 500-4 and is calculated by the data processing device 100, for example, using a hash function of SHA256.

The restriction information (cdlnextevents) 500-6 is a value indicating a condition under which new event information can be registered using this event information 500, and in the example in FIG. 5, the organization name "company B" of the node is set as the registrable condition. For the restriction information 500-6, as other conditions, a combination of a user name, a password, an event history ID, or the like can be set. The restriction information 500-6 is set to the event information 500 by a user of the company A, for example.

### (Restriction information collation processing example)

Next, a collation processing example for each piece of restriction information at the time when a new event is registered will be described. An example of collation processing executed by the restriction information collation unit 417 of the data processing device 100 (CDL core 101) illustrated in FIG. 4 on the basis of various types of restriction information set to the event information 500 in FIG. 5 will be described.

### (1) A case where the restriction information is a password

In a case where a password is set as the restriction information of the event information 500, the data processing device 100 instructs a user who requests to register new event information to input a password. The data processing device 100 (restriction information collation unit 417) collates a hash value calculated on the basis of the password input by the user and a hash value calculated on the basis of a password described in a past event.

If the collation result indicates matching, the data processing device 100 (request determination unit 413) determines that the restriction information is satisfied and allows to register the new event information. Here, if another piece of restriction information is set to the acquired event information 500, the data processing device 100 executes collation processing corresponding to all these pieces of restriction information, and if all the collation results indicate matching, the data processing device 100 allows to register a new event information.

Any user who can call the API of the data processing device 100 (CDL manager 111) can read the event information. Therefore, in a case where the restriction information is a password, the data processing device 100 registers a hash value of the password of the past event information to the event information to be registered. As a result, it is possible to prevent an unauthorized user from newly registering an event using a password with which the past event information is illegally acquired.

When the hash value of the password is calculated, if a password character string is simply input as the hash value, this is revealed when, for example, another user happens to use the same password character string. In order to prevent this, it is desirable that the data processing device 100 uses a method for using a random character string (for example, event history ID character string using UUID) as a salt and giving a result of connecting the password character string as an input of hash calculation.

Note that a method for transferring a password to a person who registers a new event by referring to the past event may be any method as long as the password is not leaked on the CDL. For example, sending a mail, describing in a slip sent together with an object such as a product, or the like can be considered.

Furthermore, in a case where the restriction information is a password, in order to prevent reuse of a condition that has been used once, the API of the data processing device 100 confirms that the password used at the time when the new event is registered is not used for the registration of the past events.

### (2) A case where the restriction information is a user name

In a case where a user name is set as the restriction information of the event information 500, the data processing device 100 (restriction information collation unit 417) confirms authentication information of a user who has called the API. The data processing device 100 confirms whether or not a name of the user who has called the API matches a name described in the event information 500 and allows to register a new event only in a case where the user names match. Furthermore, for example, in a case where an organization name (user name @ organization name) is described in the restriction information of the event information 500, the data processing device 100 (restriction information collation unit 417) allows to register a new event only in a case where the organization name described in the event information 500 matches the name of the user who has called the API.

### (3) A case where the restriction information is an event history ID

In a case where an event history ID is set as the restriction information of the event information 500, the data processing device 100 (restriction information collation unit 417) acquires an event history ID described in information provided from a user who has called the API. Then, only when the event history ID can be acquired and the event history ID matches an event history ID of referred past event information, the data processing device 100 allows to register a new event.

In a case where the restriction information is an event history ID, this can be used to limit the number of events to be registered by referring to the event. For example, in a case where only one combination of an organization name and an event history ID is set as restriction information for a certain event, the data processing device 100 allows to register only one new event from the corresponding organization. As a result, the data processing device 100 can limit the number of registered new events that corrects description content of the past event information to only one. Furthermore, when the new event information to be corrected is registered, the data processing device 100 can correct the past event as a single branch that is not separated in a branch graph by describing only one piece of restriction information as described above.

In a case where the organization manages the distributed ledger in the BC regarding the condition determination based on the restriction information described above, the data processing device 100 determines a condition using a chaincode with a BC framework such as Hyperledger Fabric at the time of an event registration request from the user. For example, in a case where the restriction information is a password, the data processing device 100 determines a condition that information and a password regarding the registration of the event requested by the user matches a password described in the restriction information of the past event information 500 to be referred.

Furthermore, in a case of a system configuration in which a single central server trusted by all the organizations is arranged without assuming the use of the Hyperledger Fabric of the BC or the like, it is sufficient that the arranged single server execute the processing for determining the restriction information.

### (Data processing example of data processing device)

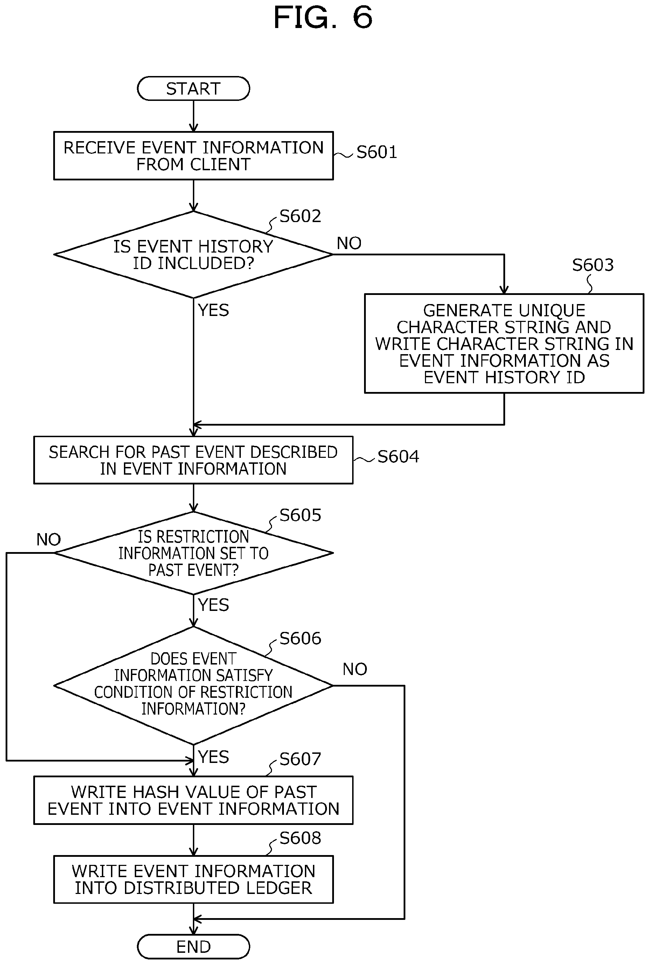

FIG. 6 is a flowchart illustrating a data processing example of a data processing device. A data processing example of the data processing device 100 when new event information is registered will be described. First, at the time when a new event is registered, the data processing device 100 receives event information from a client (customer system 102) (step S601).

Next, the data processing device 100 determines whether or not an event history ID is included in the received event information (step S602). When the event history ID is included in the event information (step S602: Yes), the data processing device 100 proceeds to processing in step S604. On the other hand, when the event history ID is not included in the event information (step S602: No), the data processing device 100 proceeds to processing in step S603.

In step S603, the data processing device 100 generates a unique character string and writes the character string in the event information as the event history ID (step S603). In step S604, the data processing device 100 searches for a past event described in the event information (step S604).

Next, the data processing device 100 determines whether or not the restriction information is set to event information of the searched past event (step S605). When the restriction information is set to the event information of the past event (step S605: Yes), the data processing device 100 proceeds to processing in step S606. On the other hand, when the restriction information is not set to the event information of the past event (step S605: No), the data processing device 100 proceeds to processing in step S607.

In step S606, the data processing device 100 determines whether or not the event information received from the client satisfies conditions of the restriction information (step S606). As described above, in a case where the restriction information is set to the past event information, the data processing device 100 collates the conditions of the restriction information (user name, password, event history ID, or the like) with information input by a user corresponding to the restriction information and determines whether or not the conditions match the information.

When the conditions of the restriction information are satisfied as the result of the determination in step S606 (step S606: Yes), the data processing device 100 proceeds to processing in step S607, and the conditions of the restriction information are not satisfied (step S606: No), the data processing device 100 determines the result as an error and ends the above processing.

In step S607, the data processing device 100 calculates a hash value of the event information of the past event and writes the calculated hash value into the event information to be registered (step S607). Next, the data processing device 100 writes the event information into the distributed ledger (global repository) DB in the BC (step S608). According to the above, the data processing device 100 ends the series of data processing.

### (Specific example of restrictions of new event creation)

Next, a specific example of restrictions when a new event is created on the basis of the past event will be described.

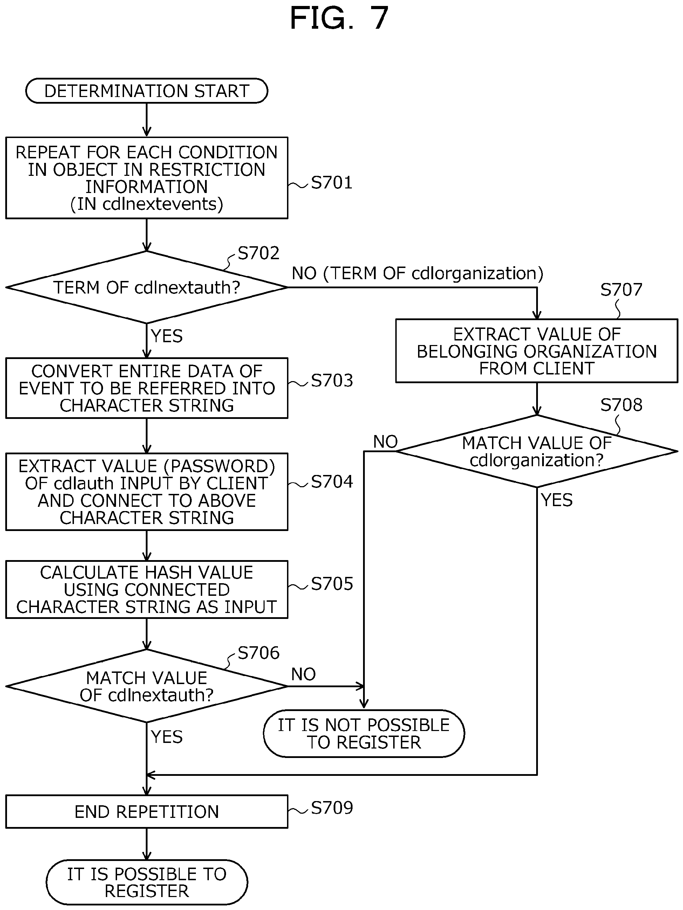

The data processing device 100 executes the following processing at the time when a client (customer system 102) requests to register a new event. The data processing device 100 searches for a registered past event "cdlevent" corresponding to an ID (character string) exemplified in a "cdlpreviousevents" array (for example, JSON object) in event information requested by the client. Then, the data processing device 100 extracts a "cdlnextevents" array corresponding to the new event from "cdlevent". Determination processing illustrated in FIG. 7 is started on each object ({ ... }) exemplified in the "cdlnextevents" array.

FIG. 7 is a flowchart illustrating a processing example that the data processing device executes. In FIG. 7, for example, a processing example executed by the data processing device that is an object delivery destination. First, the data processing device 100 repeatedly executes processing on each of conditions in the object in "cdlnextevents" describing restriction information (step S701). The data processing device 100 repeatedly executes each processing in steps S701 to S709 until processing for all the conditions set to the restriction information is completed.

Next, the data processing device 100 determines whether or not data extraction is a term "cdlnextauth" of the restriction information (step S702).

For example, the restriction information is described as follows in a case of the JSON object. cdlnextevents:[{
cdleventid :"eventid- 12345-by-logistics",cdlnextauth:"...",
cdlorganization: "..."}]

The term "cdlnextauth" indicates a value of the condition (for example, password or the like) of the restriction information, and "cdlorganization" indicates a value of the condition (for example, organization name) of the restriction information. In a case of this restriction information setting, the data processing device 100 allows to register new event information only in a case where "cdlnextauth (password authentication)" matches and "cdlorganization (organization of requester) matches.

As a result of the determination in step S702, the condition of the restriction information to be referred is "cdlnextauth" (step S702: Yes), the data processing device 100 proceeds to processing in step S703. On the other hand, the data extraction is not the term "cdlnextauth" of the restriction information (step S702: No), the procedure proceeds to processing in step S707.

In step S703, the data processing device 100 converts entire data of the past event information to be referred into a character string (step S703). Next, the data processing device 100 extracts a value of "cdlauth" (for example, password) input by the client and connects the extracted value to the character string converted in step S703 (step S704).

Next, the data processing device 100 calculates a hash value using the connected character string as an input (step S705). Next, the data processing device 100 determines whether or not the hash value calculated in step S705 matches the value "cdlnextauth" of the restriction information (step S706).

When the hash value matches the value "cdlnextauth" of the restriction information as a result of the determination (step S706: Yes), the data processing device 100 proceeds to processing in step S709. On the other hand, when the hash value does not match the value "cdlnextauth" of the restriction information (step S706: No), the data processing device 100 determines that it is not possible to register new event information and ends the series of above processing.

In step S707, the data processing device 100 extracts a value of an organization to which the client belongs from the client (customer system 102) (step S707). Next, the data processing device 100 determines whether the extracted value of the organization to which the client belongs matches the value of the condition "cdlorganization" of the restriction information (step S708).

When the extracted value of the organization to which the client belongs matches the condition of the restriction information as a result of the determination (step S708: Yes), the data processing device 100 proceeds to processing in step S709. On the other hand, when the extracted value of the organization to which the client belongs does not match the condition of the restriction information (step S708: No), the data processing device 100 determines that it is not possible to register the new event information and ends the series of above processing.

In step S709, the data processing device 100 determines that it is possible to register the new event information and ends the series of repeated processing above in response to the completion of the processing on all the conditions set to the restriction information in the object in "cdlevents" (step S709).

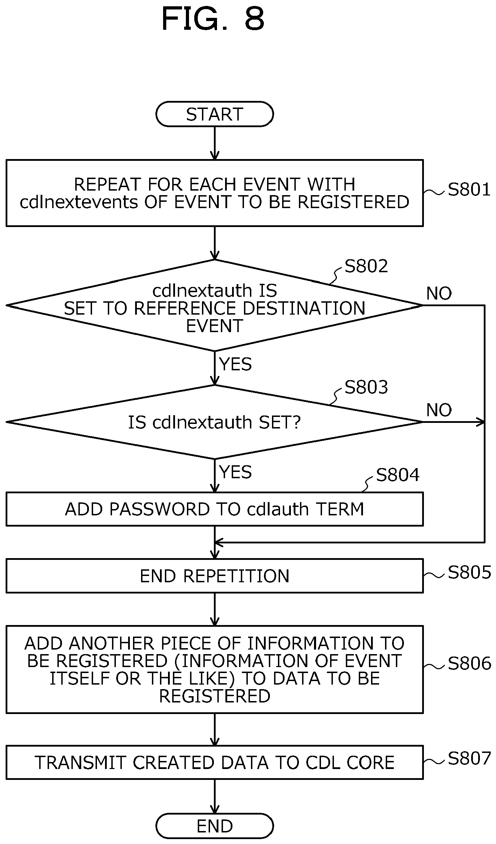

FIG. 8 is a flowchart illustrating a processing example that a client executes. FIG. 8 illustrates, for example, a processing example executed by a client that is an object delivery destination that is a processing example executed by the client (customer system 102) connected to the data processing device 100 (CDL core 101) of the certain node described with reference to FIG. 7.

The customer system 102 repeatedly executes processing on each piece of restriction information "cdlnextevents" of an event that a user intends to register (step S801). The customer system 102 repeatedly executes each processing in steps S801 to S805 until the processing on all the conditions set to the restriction information in the object in "cdlnextevents" is completed.

Next, the customer system 102 determines whether or not the term "cdlnextauth" of the condition (for example, password or the like) of the restriction information is set to the event information of the past event that is a reference destination (step S802). When the term of "cdlnextauth" is set (step S802: Yes), the customer system 102 proceeds to processing in step S803. On the other hand, when the term of "cdlnextauth" is not set (step S802: No), the customer system 102 proceeds to processing in step S805.

In step S803, the customer system 102 determines whether or not the value of "cdlnextauth" is set (step S803). When the value is set to "cdlnextauth" (step S803: Yes), the customer system 102 proceeds to processing in step S804. On the other hand, the value is not set to "cdlnextauth" (step S803: No), the customer system 102 proceeds to processing in step S805.

In step S804, the customer system 102 adds a value of a password input by a user to the term of "cdlauth" (step S804). In step S805, the customer system 102 ends the repeated processing when execution of the processing on all the conditions set to the restriction information in the object in "cdlnextevents" is completed (step S805) and proceeds to processing in step S806.

Next, the customer system 102 adds another piece of information to be registered, for example, information of a new event itself (corresponding to information regarding event 500-3 in FIG. 5) to data to be registered (step S806). Next, the customer system 102 transmits the created data to the data processing device 100 (CDL core 101) (step S807). In this processing, for example, the customer system 102 POST-transmits the created data of the JSON object to the API of the CDL core 101. According to the above, the series of processing by the customer system 102 side ends.

Note that the another condition "cdlorganization" of the restriction information described with reference to FIG. 7 is that the CDL core 101 side determines "which organization has requested" at the time of the request of the customer system 102 side (refer to FIG. 7). Therefore, it is not necessary to explicitly describe an organization name in the data of the JSON or the like transmitted by the customer system 102 on the client side.

In a case where a new event is registered from the node in the system for adding the event performed for each node to the event information in the network and registering the event information, the data processing device 100 according to the embodiment described above acquires one or the plurality of conditions set to the restriction information included in the event information. The data processing device 100 determines whether or not the information regarding the registration of the new event input from the node satisfies one or all of the plurality of conditions set to the restriction information. When the one or all of the plurality of conditions set to the restriction information is satisfied, the data processing device 100 registers the new event information. As a result, the data processing device 100 can register the new event only from the permitted node and can prevent registration of an event from a node which is not qualified for registration.

Furthermore, in a case where the information of the node is set as the condition of the restriction information, the processing of acquiring the data processing device 100 acquires information of a node that registers a new event and the information of the node included in the restriction information, and the processing of determining determines whether or not the information of the node that registers the new event matches the information of the node included in the restriction information. As a result, the data processing device 100 allows to register a new event from a node of an organization or a user that matches an organization name, a user name, or the like included in the restriction information and can prevent registration of an event from an organization or a user that is not qualified for registration.

Furthermore, in a case where the event history ID that identifies the event is set as the condition of the restriction information, the processing of acquiring the data processing device 100 acquires the event history ID input from the node that registers the new event and the event history ID included in the restriction information, and the processing of determining determines whether the event history ID input from the node matches the event history ID included in the restriction information. As a result, the data processing device 100 allows to register the new event from the node that has input the event ID that matches the event ID included in the restriction information and can prevent the registration of the event from the node that is not qualified for registration.

Furthermore, in a case where the password of the event is set as the condition of the restriction information, the processing of acquiring the data processing device 100 acquires the password input from the node that registers the new event and the password included in the restriction information, and the processing of determining determines whether the password input from the node that registers the new event matches the password included in the restriction information. As a result, the data processing device 100 allows to register the new event from the node that has input the password that matches the password included in the restriction information and can prevent the registration of the event from the node that is not qualified for registration.

Furthermore, the processing of performing the registration of the data processing device 100 obtains the hash value of the data string of the event information and includes and registers the hash value in the new event information, and the processing of determining determines whether the hash value obtained on the basis of the information regarding the registration of the new event input from the node matches the hash value included in the event information. As a result, the data processing device 100 can verify whether or not the content of the event information read on the basis of the hash value is changed and can maintain the confidentiality and reliability of the event information in the system that adds and registers the new event information.

Furthermore, the data processing device 100 includes the event history ID in the global repository on the blockchain and records the event information and sequentially adds and registers the event information in the blockchain as the event information for each event history ID from the plurality of nodes through the processing for registering the event information. As a result, the data processing device 100 can update the event information in the blockchain with the history for each time when the event of the plurality of organizations occurs.

From these, the data processing device 100 according to the embodiment allows to register the new event information only from the node that satisfies the conditions of the restriction information set to the event information. As a result, for example, even a user who knows the event history ID, a user who does not satisfy the conditions of the restriction information is not allowed to register the new event. Therefore, it is possible to maintain the confidentiality of the event information. Furthermore, it is possible to prevent that a large number of pieces of new event information of which the event information is corrected is registered and complicated and to appropriately manage the event information.

Note that the data processing method described in the embodiment can be implemented by causing a processor such as a server to execute a program that is prepared in advance. The present method is implemented by being recorded on a computer-readable recording medium such as a hard disk, a flexible disk, a CD-ROM, a DVD, or a flash memory, and is read from the recording medium and is executed by the computer. Furthermore, the present method may be distributed via a network such as the Internet.

## Claims

1. A data processing program that causes at least one computer to execute a process, the process comprising:
acquiring a condition information included in event information that indicates events performed in each of nodes when a first event is performed in a first node of the nodes;
determining whether information regarding the first event satisfies the acquired condition information;
registering the first event to the event information when the information regarding the first event satisfies the acquired condition information; and
determining the first event is not registered to the event information when the information regarding the first event does not satisfy the acquired condition information.

2. The data processing program according to claim 1, wherein
the acquiring includes:
acquiring first information regarding the first node as the information regarding the information regarding the first event; and
acquiring second information regarding the nodes in which events performed in the event information as the acquired condition information, and
the determining includes determining whether the first information matches the second information.

3. The data processing program according to claim 1 or 2, wherein
the acquiring includes:
acquiring a first password input to the first node as the information regarding the information regarding the first event; and
acquiring a second password input to the nodes in which events performed in the event information as the acquired condition information, and
the determining includes determining whether the first password matches the second password.

4. The data processing program according to any one of claims 1 to 3, wherein
the acquiring includes:
acquiring a first hash value of a data string of the first event as the information regarding the information regarding the first event; and
acquiring a hash value of a data string of the events included in the event information as the acquired condition information, and
the determining includes determining whether the first password matches the second password.

5. The data processing program according to claim 2, wherein
the event information that includes the second information registered in a global repository on a blockchain for each of the nodes, and
the registered first event is sequentially registered to the blockchain for the second information by the nodes.

6. A data processing method for a computer to execute a process comprising:
acquiring a condition information included in event information that indicates events performed in each of nodes when a first event is performed in a first node of the nodes;
determining whether information regarding the first event satisfies the acquired condition information;
registering the first event to the event information when the information regarding the first event satisfies the acquired condition information; and
determining the first event is not registered to the event information when the information regarding the first event does not satisfy the acquired condition information.

7. A data processing device comprising:
a control unit configured to:
acquire a condition information included in event information that indicates events performed in each nodes when a first event is performed in a first node of the nodes,
determine whether information regarding the first event satisfies the acquired condition information,
register the first event to the event information when the information regarding the first event satisfies the acquired condition information, and
determine the first event is not registered to the event information when the information regarding the first event does not satisfy the acquired condition information.
